# EUROPÄISCHE PATENTSCHRIFT

(11) **EP 2 363 421 B1**
(45) Veröffentlichungstag und Bekanntmachung des Hinweises auf die Patenterteilung: **18.09.2013**
(21) Anmeldenummer: 11162363.3
(22) Anmeldetag: 13.04.2006
(51) Int. Cl.: C08F 220/18, C08F 220/38, A01N 25/10

(54) **Copolymere CP für die Herstellung von Zubereitungen, enthaltend wenigstens ein Conazolfungizid**
Copolymers CP for the preparation of compositions containing at least one type of fungicidal conazole
Copolymères CP pour la préparation de compositions comprenant au moins un fongicide du groupe des conazoles

(30) Priorität: 18.04.2005 DE 102005017800
(43) Veröffentlichungstag der Anmeldung: 07.09.2011
(62) Teilanmeldung aus: 06753385.1
(73) Patentinhaber: BASF SE, 67056 Ludwigshafen (DE)
(72) Erfinder: Koltzenburg, Sebastian, 67125, Dannstadt (DE); Dombo, Peter, 65207, Wiesbaden (DE); Oetter, Günter, 67227, Frankenthal (DE); Krüger, Christian, 55291, Saulheim (DE); Schrof, Wolfgang, 67271, Neuleiningen (DE); Bratz, Matthias, 67133, Maxdorf (DE)

(56) Entgegenhaltungen:
- US-A- 4 012 560
- US-A- 4 558 092
- US-A1- 2002 007 005

## Beschreibung

Die Erfindung betrifft Copolymere CP für die Herstellung von Zubereitungen, insbesondere Zubereitungen für den Pflanzenschutz, die wenigstens ein Conazolfungizid, insbesondere Epoxiconazol, und wenigstens einen weiteren Wirkstoff enthalten.

Für die Anwendung im Pflanzen- und Materialschutz ist es wünschenswert, fungizide Wirkstoffe in Form von Zubereitungen zu formulieren, die sich mit Wasser leicht auf die zur Applikation gewünschte niedrige Konzentration verdünnen lassen. Neben lösungsmittelhaltigen Emulsionskonzentraten (sogenannte EC's), in denen der Wirkstoff zusammen mit oberflächenaktiven Substanzen in einem organischen, mit Wasser in der Regel nicht mischbaren Lösungsmittel oder Öl gelöst oder suspendiert vorliegt, sind Suspensionskonzentrate (sogenannte SC's) zu nennen, in denen der Wirkstoff in Form einer feinteiligen Suspension gemeinsam mit oberflächenaktiven Substanzen vorliegt. Daneben kennt man noch wasserdispergierbare Pulver (WP) und Suspoemulsionen (SE's), welche wenigstens eine erste feste Wirkstoffphase und wenigstens eine weitere flüssige organische Phase aufweisen, die in einer wässrigen Phase emulgiert/suspendiert vorliegen.

EC's haben den prinzipiellen Nachteil, dass sie größere Mengen an organischen Lösungsmitteln enthalten, was zum einen die Herstellungskosten erhöht und zusätzliche Risiken bei Lagerung und Handhabung birgt. Suspensionskonzentrate wiederum enthalten im Unterschied zu EC's nur geringe Mengen an flüchtigen organischen Substanzen, haben jedoch den Nachteil einer geringeren Lagerstabilität, insbesondere dann, wenn die Wirkstoffe, wie im Falle des Epoxiconazols, zur Kristallisation neigen. Suspoemulsionen wiederum haben neben einem nicht zu vernachlässigenden Gehalt an flüchtigen, brennbaren organischen Lösungsmitteln den Nachteil, dass diese komplexen mehrphasigen Systeme thermodynamisch instabil sind, so dass zum einen die Lagerstabilität oftmals nicht zufriedenstellend ist und beim Verdünnen mit Wasser in unkontrollierter Weise eine Flokkulation und Niederschlagsbildung von organischen Bestandteilen auftritt bzw. auftreten kann.

Ein weiterer Nachteil konventioneller, mit Wasser verdünnbarer Wirkstoffzubereitungen wie SC, EC und SE ist darin zu sehen, dass die nach Verdünnen der Zubereitungen mit Wasser in der wässrigen Phase suspendierten bzw. emulgierten Wirkstoffpartikel bzw. Wirkstofftröpfchen eine vergleichsweise große Teilchengröße aufweisen, die in der Regel mehrere µm beträgt. Es ist jedoch wünschenswert, dass der Wirkstoff nach Verdünnen der Formulierung mit Wasser auf die für die Applikation gewünschte Konzentration in der erhaltenen wässrigen Aufbereitung in möglichst feinverteilter Form vorliegt, um einerseits eine gleichmäßige Verteilung in der Formulierung und damit eine bessere Handhabbarkeit und Dosierbarkeit zu gewährleisten und gleichzeitig, um die Bioverfügbarkeit des Wirkstoffs in der Formulierung zu erhöhen. Erstrebenswert sind dabei Formulierungen, in denen die heterogene Phase mittlere Teilchengrößen unterhalb 500 nm aufweist.

Conazolfungizide sind organische Wirkstoffe mit einer Imidazol- oder Triazolgruppe, deren fungizide Wirkung bekanntermaßen auf der Hemmung der Ergosterolbiosynthese beruht und die daher gegen eine Reihe von pflanzenschädigenden Pilzen aus der Gruppe der Ascomyceten, Basidiomyceten und Deuteromyceten wirksam sind. Epoxiconazol (Common Name für rel-1-[[(2R,3S)-3-(2-chlorphenyl)-2-(4-fluorphenyl)-oxiranyl]methyl]-1H-1,2,4-triazol) ist beispielsweise ein neuerer Wirkstoff aus der Gruppe der Azolfungizide.

Zur Verbreiterung ihres Wirkungsspektrums und zur Erhöhung ihrer fungiziden Wirkung werden Conazolfungizide häufig gemeinsam mit weiteren Wirkstoffen formuliert. Hierbei können sich Probleme ergeben, insbesondere wenn der weitere Wirkstoff nur eine geringe Wasserlöslichkeit aufweist.

Die WO 03/055944 beschreibt die Verwendung von Copolymeren auf Basis von Acrylamidomethylpropansulfonsäure (AMPS) als Kristallisationsinhibitor in wässrigen Suspensionskonzentraten für den Pflanzenschutz.

Aus der älteren Patentanmeldung PCT/EP 04/011797 sind Wirkstoffformulierungen bekannt, die wenigstens einen Wirkstoff und wenigstens ein statistisches Copolymer enthalten, das durch radikalische Polymerisation von olefinisch ungesättigten Sulfonsäuren mit Estern oder Amiden der Acrylsäure oder der Methacrylsäure erhältlich ist.

Der Erfindung liegt daher die Aufgabe zugrunde, Copolymere CP bereitzustellen für Zubereitungen von Conazolfungiziden und insbesondere des Epoxiconazols, die in Wasser dispergierbar sind oder sich mit Wasser leicht verdünnen lassen, ohne dass es zu unerwünschten Abscheidungen kommt. Die Zubereitungen sollten möglichst geringe Mengen an organischen Lösungsmitteln enthalten und zudem beim Verdünnen eine feine Verteilung des Wirkstoffs in der wässrigen Phase gewährleisten. Außerdem ist eine hohe Lagerstabilität gewünscht.

Diese Aufgabe wird durch Copolymere CP gelöst, welche aus ethylenisch ungesättigten Monomeren M aufgebaut sind, wobei die das Copolymer CP konstituierenden Monomere M
α) 5 bis 60 Gew.-%, bezogen auf die Gesamtmenge der Monomere M, wenigstens ein monoethylenisch ungesättigtes Monomer M1, das wenigstens eine Sulfonsäuregruppe aufweist,
β3) 20 bis 90 Gew.-%, bezogen auf die Gesamtmenge der Monomere M, wenigstens ein monoethylenisch ungesättigtes Monomer M2a(1), das bei 20°C in Wasser eine Löslichkeit im Bereich von 1 bis < 50 g/l aufweist, ausgewählt unter den Estern der Acrylsäure mit C₂-C₄-Alkanolen und den Estern der Methacrylsäure mit C₁-C₄-Alkanolen, und
ß4) 5 bis 60 Gew.-% , bezogen auf die Gesamtmenge der Monomere M, wenigstens ein zweites Monomer M2a(2), das bei 20°C in Wasser eine Löslichkeit unterhalb 1 g/l aufweist und die ausgewählt sind unter C₈-C₁₈-Alkylacrylaten und C₈-C₁₈-Alkylmethacrylaten umfassen.

Diese Copolymere CP lassen sich für die Herstellung von Wirkstoffzubereitungen verwenden, enthaltend
a) wenigstens ein fungizider Wirkstoff aus der Gruppe der Conazole (Wirkstoff 1) und
b) wenigstens eine weitere Pflanzenschutzwirkstoff (Wirkstoff 2), der in Wasser bei 20°C eine Löslichkeit unterhalb 20 g/l aufweist,
in einem Mengenverhältnis von Wirkstoff 1 zu Wirkstoff 2 im Bereich von 10:1 bis 1:10.

Die auf Basis der erfindungsgemäßen Copolymere CP hergestellten Zubereitungen sind in vorteilhafter Weise geeignet, Mischungen aus wenigstens einem Conazolfungizid, insbesondere Epoxiconazol, und dem Wirkstoff 2 in wässriger Phase zu stabilisieren, ohne dass es hierzu organischer Lösungsmittel bedarf. Im Unterschied zu den im Stand der Technik beschriebenen Suspoemulsionen erhält man beim Verdünnen der Zubereitungen mit Wasser wässrige Formulierungen, in denen Epoxiconazol und der wenigstens eine weitere Wirkstoff 2 in äußerst feinteiliger bis hin zu molekulardisperser Form in der kontinuierlichen wässrigen Phase vorliegen. Man nimmt an, dass die Wirkstoffe in der wässrigen Phase mit den Copolymeren CP Aggregate bilden. Diese Aggregate weisen in der Regel mittlere Teilchengrößen unterhalb 500 nm, insbesondere unterhalb 400 nm, speziell unterhalb 300 nm und ganz speziell unterhalb 200 nm auf. Inhomogenitäten und Instabilitäten in Folge von Koagulation, Kristallisation, Flokkulation oder Sedimentation treten beim Verdünnen der Zubereitung nicht oder nur in sehr geringem Maße auf. Zudem ist, vermutlich auf Grund der äußerst feinen Verteilung der Wirkstoffe in der wässrigen Applikationsform, entsprechend dem sehr niedri-gen apparenten Teilchendurchmesser der Wirkstoffaggregate, die Aktivität der Wirkstoffe im Vergleich zu konventionellen Formulierungen von Azolfungiziden und insbesondere des Epoxiconazols erhöht.

Die hier angegebenen Teilchengrößen sind gewichtsmittlere Teilchengrößen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429.

Die Zubereitungen enthalten als Wirkstoff 1 wenigstens ein Conazolfungizid (siehe http://www.hclrss.demon.co.uk/class_fungicides.html). Zu den Conazolfungiziden zählen bekanntermaßen bestimmte Imidazolverbindungen wie Climbazol, Clotrimazol, Imazalil, Oxpoconazol, Prochloraz, und Triflumizol, sowie bestimmte Triazolverbindungen wie Azaconazol, Bromuconazol, Cyproconazol, Dichlobutrazol, Difenoconazole, Diniconazol, Epoxiconazol, Etaconazol, Fenbuconazol, Fluquinconazol, Flusilazol, Flutriafol, Furconazol, Hexaconazol, Imibenconazol, Ipconazol, Metconazol, Myclobutanil, Penconazol, Propiconazol, Prothioconazol, Quinconazol, Simeconazol, Tebuconazol, Tetraconazol, Triticonazol, Triadimefon, Triadimenol und Uniconazol. Insbesondere handelt es sich bei dem Wirkstoff 1 um eine der vorgenannten Triazolverbindungen, insbesondere um Cyproconazol, Epoxiconazol, Fluquinconazol, Hexaconazol, Metconazol, Penconazol, Propiconazol, Prothioconazol, Tebuconazol und Triticonazol. In einer besonders bevorzugten Ausführungsform handelt es sich bei dem Wirkstoff 1 um Epoxiconazol. In einer anderen besonders bevorzugten Ausführungsform handelt es sich bei dem Wirkstoff 1 um Metconazol.

Weiterhin enthalten die Wirkstoffzubereitungen wenigstens einen, z.B. 1 oder 2 weitere Wirkstoffe 2, die bei 20°C in Wasser eine Löslichkeit unterhalb 20 g/l, insbesondere unterhalb 10 g/l und speziell unterhalb 5 g/l aufweisen. Bei den Wirkstoffen 2 handelt es sich insbesondere um fungizide Wirkstoffe. Grundsätzlich kann es sich jedoch auch um einen Fungiziden verschiedenen Wirkstoff handeln, beispielsweise um ein Insektizid, Acarizid, Herbizid, Nematizid oder einen Wachstumsregulator. Wesentlich ist, dass Wirkstoff und Wirkstoff 2 voneinander verschieden sind, wenigstens einer der Wirkstoffe ein Conazolfungizid ist und der weitere Wirkstoff eine Löslichkeit in Wasser bei 20 °C unterhalb 20 g/l aufweist. Geeignete Wirkstoffe 2 sind dem Fachmann bekannt, siehe z.B. http://www.hclrss.demon.co.uk/index.html.

In einer bevorzugten Ausführungsform der Erfindung weist der Wirkstoff 2 einen Schmelzpunkt unterhalb 70°C (bei Normaldruck) auf.

Beispiele für erfingdungsgemäß bevorzugte fungizide Wirkstoffe 2 sind z.B.
- Strobilurinfungizide wie Azoxystrobin Dimoxystrobin Fluoxastrobin, Kresoxim-Methyl, Metominostrobin, Orysastrobin, Picoxystrobin, Pyractostrobin und Trifloxystrobin, insbesondere Pyraclostrobin,
- Morpholinfungizide wie Aldamorph, Benzamorf, Carbamorph, Dodemorph, Dimethomorph, Fenpropimorph, Fenpropidin, Flumorph und Tridemorph,
- Chlorothalonil,
- Boscalid,
- nicht klassifizierte Fungizide, die unter Spiroxamin und Metrafenone ausgewählt sind,
- sowie die oben genannten Conazol-Fungizide, die von dem in der Zusammensetzung enthaltenen Wirkstoff 1 verschieden sind, insbesondere Prochloraz, Cyproconazol, Fluquinconazol, Hexaconazol, Metconazol, Penconazol, Propiconazol, Prothioconazol, Tebuconazol und Triticonazol und speziell Metconazol, Fluquinconazol und Prothioconazol.

In einer besonders bevorzugten Aufführungsform handelt es sich bei dem Wirkstoff 2 um Pyraclostrobin. In einer weiteren besonders bevorzugten Ausführungsform handelt es sich bei dem Wirkstoff 2 um eines der vorgenannten Conazolfungizide, insbesondere um Prochloraz, Cyproconazol, Fluquinconazol, Hexaconazol, Metconazol, Penconazol, Propiconazol, Prothioconazol, Tebuconazol und Triticonazol und speziell um Metconazol, Fluquinconazol und Prothioconazol.

Speziell handelt es sich bei den Wirkstoffen 1 und 2 um eine Kombination von Epoxiconazol als Wirkstoff 1 mit wenigstens einem Strobilurin, insbesondere Pyraclostrobin, und gegebenenfalls einem weiteren Wirkstoff, z.B. Fenpropidin als Wirkstoff(e) 2 oder um eine Kombination von Epoxiconazol als Wirkstoff 1 mit wenigstens einem weiteren, von Epoxiconazol verschiedenen Conazolfungizid als Wirkstoff 2, insbesondere mit einem Conazolfungizid, das unter Prochloraz, Cyproconazol, Fluquinconazol, Hexaconazol, Metconazol, Penconazol, Propiconazol, Prothioconazol, Tebuconazol und Triticonazol und speziell Metconazol, Fluquinconazol und Prothioconazol ausgewählt ist.

Eine weitere bevorzugte Ausführungsform betrifft Zubereitungen, die als Wirkstoff 1 Metconazol und als Wirkstoff 2 ein Strobilurin, insbesondere Pyraclostrobin, enthalten.

In den Zubereitungen liegt das Mengenverhältnis von Conazolfungizid zu dem wenigstens einen weiteren Wirkstoff 2 vorzugsweise im Bereich von 1:8 bis 8:1, insbesondere im Bereich von 5:1 bis 1:5 und speziell im Bereich von 1:3 bis 3:1.

Die Zubereitungen enthalten wenigstens ein Copolymer CP, welches eine Stabilisierung des Wirkstoffs in der wässrigen Phase bewirkt. In der Regel enthalten die Zubereitungen das Copolymer CP in einer Menge von 0,1 bis 10 Gewichtsteilen, insbesondere 0,5 bis 8 Gewichtsteilen, speziell 1 bis 5 Gewichtsteilen, bezogen auf 1 Gewichtsteil der Gesamtwirkstoffmenge, d.h. der Gesamtmenge an Wirkstoff 1 und Wirkstoff 2 (entsprechend 10 bis 1000 Gew.-%, bezogen auf die Gesamtmenge an Wirkstoff 1 und Wirkstoff 2).

Bei den Copolymeren CP handelt es sich in der Regel um sogenannte statistische Copolymere, d.h. die Monomere M1, M2a(1) und M2a(2) sind statistisch entlang der Polymerkette verteilt. Grundsätzlich geeignet sind auch alternierende Copolymere CP sowie Blockcopolymere CP.

Als Monomere M1 kommen dabei grundsätzlich alle monoethylenisch ungesättigten Monomere in Betracht, die wenigstens eine Sulfonsäuregruppe aufweisen. Die Monomere M1 können sowohl in ihrer Säureform als auch in der Salzform vorliegen. Die angegebenen Gewichtsteile beziehen sich dabei auf die Säureform.

Beispiel für Monomere M1 sind Styrolsulfonsäure, Vinylsulfonsäure, Allylsulfonsäure, Methallylsulfonsäure sowie die durch die folgende allgemeine Formel I definierten Monomere und die Salze der vorgenannten Monomere 1. 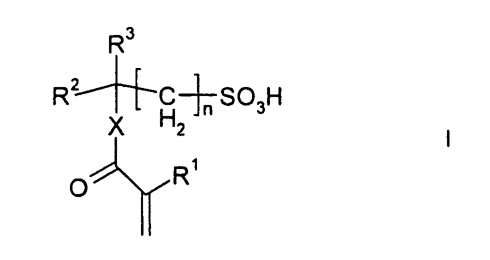 In Formel I bedeuten:
n 0, 1, 2 oder 3, insbesondere 1 oder 2;
X O oder NR⁵;
R¹ Wasserstoff oder Methyl;
R², R³ unabhängig voneinander Wasserstoff oder C₁-C₄-Alkyl, insbesondere Wasserstoff oder Methyl und
R⁵ Wasserstoff oder C₁-C₄-Alkyl, insbesondere Wasserstoff.

Beispiele für Monomere M1 der allgemeinen Formel I sind 2-Acrylamido-2-methylpropansulfonsäure, 2-Methacrylamido-2-methylpropansulfonsäure,
2-Acrylamidoethansulfonsäure, 2-Methacrylamidoethansulfonsäure,
2-Acryloxyethansulfonsäure, 2-Methacryloxyethansulfonsäure,
3-Acryloxypropansulfonsäure und 2-Methacryloxypropansulfonsäure.

Sofern die Monomere M1 in ihrer Salzform vorliegen, weisen sie ein ensprechendes Kation als Gegenion auf. Beispiele für geeignete Kationen sind Alkalimetallkationen wie Na⁺ oder K⁺, Erdalkalimetallionen wie das Ca²⁺ und Mg²⁺ weiterhin Ammoniumionen wie NH₄⁺, Tetraalkylammoniumkationen wie Tetramethylammonium, Tetraethylammonium und Tetrabutylammonium, weiterhin protonierte primäre, sekundäre und tertiäre Amine, insbesondere solche, die 1, 2 oder 3 Reste, ausgewählt unter C₁-C₂₀-Alkylgruppen und Hydroxyethylgruppen tragen, z.B. die protonierten Formen von Mono-, Di- und Tributylamin, Propylamin, Diisopropylamin, Hexylamin, Dodecylamin, Oleylamin, Stearylamin, ethoxiliertes Oleylamin, ethoxiliertes Stearylamin, Ethanolamin, Diethanolamin, Triethanolamin oder von N,N-Dimethylethanolamin.

Neben den Monomeren M1 umfassen die das Copolymer CP konstituierenden Monomere M wenigstens ein neutrales monoethylenisch ungesättigtes Monomer M2a(1) und M2a(2). Neutral bedeutet, dass die Monomere M2a(1) und M2a(2) keine funktionelle Gruppe aufweisen, die im wässrigen sauer oder basisch reagiert oder in ionischer Form vorliegt. Die Gesamtmenge der Monomere M2a(1) und M2a(2) macht insbesondere 30 bis 95 Gew.-% und speziell 40 bis 95 Gew.-%, bezogen auf das Gesamtgewicht der Monomere M aus.

Bei den Monomeren M2a(1) handelt es sich um Monomere mit einer Wasserlöslichkeit bei 20 °C und 1013 mbar von 1 bis < 50 g/l, insbesondere 5 bis 30 g/l, ausgewählt unter den C₂-C₄-Alkylacrylaten und C₁-C₄-Alkylmethacrylaten, insbesondere Methylmethacrylat, Ethylacrylat, Ethylmethacrylat, n-Propylacrylat, speziell Methylmethacrylat. Bei den Monomeren M2a(2) handelt es sich um monoethylenisch ungesättigte Monomere mit einer Wasserlöslichkeit bei 20 °C und 1013 mbar von weniger als 1 g/l, insbesondere weniger als 0,5 g/l, ausgewählt unter den Estern der Acrylsäure und der Methacrylsäure mit C₈-C₁₈-Alkanolen, insbesondere Decylacrylat, Decylmethacrylat, Laurylacrylat, Laurylmethacrlyat, Myristylacrylat, Myristylmethacrylat, Cetylacrylat, Cetylmethacrylat, Stearylacrylat und Stearylmethacrylat. Die Mengen an Monomere M2a(1), bezogen auf die Gesamtmenge der Monomere M, beträgt 20 bis 90 Gew.-%. Die Menge der Monomere M2a(2), bezogen auf die Gesamtmenge der Monomere M, beträgt 5 bis 60 Gew.-%. Die Menge der Monomere M1 beträgt 5 bis 60 Gew.-%, bezogen auf die Gesamtmenge an Monomere M.

Daneben können die das Copolymer konstituierenden Monomere M noch weitere, von den Monomeren M1, M2a(1) und M2a(2) verschiedene Monomere M3 umfassen. Der Anteil der Monomere M3 an der Gesamtmenge der Monomere M macht vorzugsweise nicht mehr als 40 Gew.-%, insbesondere nicht mehr als 20 Gew.-% aus. In einer bevorzugten Ausführungsform umfassen die Monomere keine oder nicht mehr als 3 Gew.-%, speziell nicht mehr als 1 Gew.-% von den Monomeren M1, M2a(1) und M2a(2) verschiedene Monomere M3.

Zu den Monomeren M3 zählen monoethylenisch ungesättigte Monomere mit wenigstens einer Carbonsäuregruppe, insbesondere monoethylenisch ungesättigte Mono- und Dicarbonsäuren mit 3 bis 6 C-Atomen (Monomere M3a) wie Acrylsäure, Methacrylsäure, Vinylessigsäure, Crotonsäure, Fumarsäure, Maleinsäure, Itaconsäure, und dergleichen, und die Anhydride der vorgenannten monoethylenisch ungesättigten Dicarbonsäuren, wobei der Anteil der Monomere M3a in der Regel 20 Gew.-% und insbesondere 10 Gew.-%, bezogen auf die Gesamtmonomermenge M nicht überschreitet.

Zu den Monomeren M3 zählen weiterhin mehrfach ethylenisch ungesättigte Monomere (M3b). Der Anteil derartiger Monomere M3 wird in der Regel nicht mehr als 2 Gew.-% und insbesondere nicht mehr als 0,5 Gew.-%, bezogen auf die Gesamtmonomermenge M betragen: Beispiele hierfür sind Vinyl- und Allylester monoethylenisch ungesättigter Carbonsäuren wie Allylacrylat und Allylmethacrylat, Di- und Polyacrylate von Di- oder Polyolen wie Ethylenglykoldiacrylat, Ethylenglykoldimethacrylat, Butandioldiacrylat, Butandioldimethacrylat, Hexandioldiacrylat, Hexandioldimethacrylat, Triethylenglykoldiacrylat, Triethylenglykoltrimethacrylat, Tris(hydroxymethyl)ethantriacrylat und -trimethacrylat, Pentaerythrittriacrylat und -trimethacrylat, ferner die Allyl- und Methallylester von polyfunktionellen Carbonsäuren, wie Diallylmaleat, Diallylfumarat, Diallylphthalat. Typische Monomere M3b sind auch Verbindungen, wie Divinylbenzol, Divinylharnstoff, Diallylharnstoff, Triallylcyanurat, N,N'-Divinyl- und N,N'-Diallylimidazolidin-2-on, sowie Methylenbisacrylamid und Methylenbismethacrylamid.

Für die Zubereitungen sind weiterhin Copolymere CP bevorzugt, die ein zahlenmittleres Molekulargewicht Mₙ im Bereich von 1000 bis 100000 Dalton, insbesondere 2000 bis 50000 Dalton und speziell 5000 bis 20000 Dalton aufweisen. Das gewichtsmittlere Molekulargewicht liegt häufig im Bereich von 2000 bis 1000000 Dalton, häufig im Bereich von 3000 bis 200000 Dalton, insbesondere 4000 bis 100000 Dalton und speziell 10000 bis 50000 Dalton. Das Verhältnis M_{w}/Mₙ liegt häufig im Bereich von 1, 1:1 bis 10:1, insbesondere im Bereich von 1,2:1 bis 5:1. Die Molmassen M_{w} und Mₙ sowie die Uneinheitlichkeit der Polymere werden durch Größenausschlusschromatographie (= Gelpermeationschromatographie oder kurz GPC) bestimmt. Als Kalibrationsmaterial können handelsübliche Polymethylmethacylat (PMMA)-Eichsätze verwendet werden.

In der Regel wird das in den Zubereitungen enthaltene Copolymerisat eine Glasübergangstemperatur T_{g} im Bereich von -80 bis 160°C und häufig im Bereich von -40°C bis +100°C aufweisen. Unter der Glasübergangstemperatur T_{g} wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

In diesem Zusammenhang erweist es sich als hilfreich, die Glasübergangstemperatur T_{g} des Copolymeren CP mit Hilfe der Gleichung von Fox (T.G. Fox, Bull. Am. Phys. Soc. (Ser. II) 1, 123 [1956] und Ullmanns Enzyklopädie der technischen Chemie, Weinheim (1980), S. 17-18) anhand der Glasübergangstemperatur der jeweiligen Homopolymere der das Polymer konstituierenden Monomere M abzuschätzen. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt.

Die in den Zubereitungen enthaltenen Copolymere CP sind zum Teil aus der PCT/EP 04/011797 bekannt oder können nach üblichen Methoden durch radikalische Polymerisation der Monomere M hergestellt werden. Die Polymerisation kann durch freie radikalische Polymerisation oder durch kontrollierte radikalische Polymerisationsverfahren erfolgen. Die Polymerisation kann unter Einsatz eines oder mehrerer Initiatoren und als Lösungspolymerisation, als Emulsionspolymerisation, als Suspensionspolymerisation oder als Fällungspolymerisation oder auch in Substanz durchgeführt werden. Die Polymerisation kann als Batchreaktion, in semikontinuierlicher oder kontinuierlicher Fahrweise durchgeführt werden.

Die Reaktionszeiten liegen im Allgemeinen im Bereich zwischen 1 und 12 Stunden. Der Temperaturbereich, in dem die Reaktionen durchgeführt werden können, reicht im Allgemeinen von 20 bis 200°C, bevorzugt von 40 bis 120°C. Der Polymerisationsdruck ist von untergeordneter Bedeutung und kann im Bereich von Normaldruck oder leichtem Unterdruck, z.B. > 800 mbar oder bei Überdruck, z.B. bis 10 bar erfolgen, wobei höhere oder niedrigere Drücke ebenfalls angewendet werden können.

Als Initiatoren für die radikalische Polymerisation werden übliche radikalbildende Substanzen eingesetzt. Bevorzugt sind Initiatoren aus der Gruppe der Azoverbindungen, der Peroxidverbindungen oder der Hydroperoxidverbindungen. Beispielsweise seien genannt Acetylperoxid, Benzoylperoxid, Lauroylperoxid, tert-Butylperoxy-isobutyrat, Caproylperoxid, Cumolhydroperoxid, 2,2'-Azobis-isobutyronitril, 2,2'-Azobis(2-methylbutyronitril), 2,2'-Azobis[2-methyl-N-(2-hydroxyethyl)propionamid], 1,1'-Azobis(1-cyclohexancarbonitril), 2,2'-Azobis(2,4-dimethylvaleronitril), 2,2'-Azobis(N,N'-dimethylenisobutyroamidin). Besonders bevorzugt ist Azobisisobutyronitril (AIBN). Üblicherweise setzt man den Initiator in einer Menge von 0,02 bis 5 Gew.-% und insbesondere 0,05 bis 3 Gew.-%, bezogen auf die Menge der Monomere M ein. Die optimale Menge an Initiator hängt naturgemäß von dem eingesetzten Initiatorsystem ab und kann vom Fachmann in Routineexperimenten ermittelt werden. Der Initiator kann teilweise oder vollständig im Reaktionsgefäß vorgelegt werden. Vorzugsweise gibt man die Hauptmenge des Initiators, insbesondere wenigstens 80 %, z. B. 80 bis 100 % des Initiators im Verlauf der Polymerisation in den Polymerisationsreaktor.

Selbstverständlich kann das Molekulargewicht der Copolymere CP durch Zugabe von Reglern in einer geringen Menge, z. B. 0,01 bis 5 Gew.-%, bezogen auf die polymerisierenden Monomere M, eingestellt werden. Als Regler kommen insbesondere organische Thioverbindungen z.B. Mercaptoalkohole wie Mercaptoethanol, Mercaptocarbonsäuren wie Thioglykolsäure, Mercaptopropionsäure, Alkylmercaptane wie Dodecylmercaptan, ferner Allylalkohole und Aldehyde in Betracht.

Insbesondere erfolgt die Herstellung der Copolymere CP durch radikalische Lösungspolymerisation in einem Lösungsmittel. Beispiele für Lösungsmittel sind Wasser, Alkohole, wie z.B. Methanol, Ethanol, n-Propanol und Isopropanol, dipolar-aprotische Lösungsmittel, z.B. N-Alkyllactame wie N-Methylpyrrolidon (NMP), N-Ethylpyrrolidon, weiterhin Dimethylsulfoxid (DMSO), N,N-Dialkylamide aliphatischer Carbonsäuren wie N,N-Dimethylformamid (DMF), N,N-Dimethylacetamid, weiterhin aromatische, aliphatische und cycloaliphatische Kohlenwasserstoffe, die halogeniert sein können wie Hexan, Chlorbenzol, Toluol oder Benzol. Bevorzugte Lösungsmittel sind Isopropanol, Methanol, Toluol, DMF, NMP, DMSO und Hexan, besonders bevorzugt ist DMF.

Die Zubereitungen können in fester Form oder in flüssiger Form formuliert sein. Je nach Ausgestaltung können die Zubereitungen noch Hilfsmittel und/oder Träger enthalten, wie sie in Pflanzenschutzmitteln oder in Mitteln für den Materialschutz üblich sind. Zu den Hilfsmitteln zählen insbesondere konventionelle oberflächenaktive Substanzen und sonstige im Pflanzen- und Materialschutz übliche Additive und Trägerstoffe, die fest oder flüssig sein können. Zu den oberflächenaktiven Substanzen zählen insbesondere Tenside, insbesondere solche, die Netzmitteleigenschaften haben. Zu den sonstigen Hilfsmitteln (Additive) zählen insbesondere Verdickungsmittel, Entschäumer, Konservierungsmittel, Frostschutzmittel, Stabilisierungsmittel, Anticaking-Mittel bzw. Rieselhilfsmittel und Puffer.

Prinzipiell brauchbare konventionelle oberflächenaktive Substanzen sind anionische, nichtionische und amphotere Tenside, einschließlich Polymer-Tenside, wobei das Molekulargewicht der Tenside typischerweise einen Wert von 2000 Dalton und insbesondere 1000 Dalton nicht überschreiten wird (Zahlenmittel).

Zu den anionischen Tensiden gehören beispielsweise Carboxylate, insbesondere Alkali-, Erdalkali- und Ammoniumsalze von Fettsäuren, z. B. Kaliumstearat, die üblicherweise auch als Seifen bezeichnet werden; Acylglutamate; Sarkosinate, z. B. Natriumlauroylsarkosinat; Taurate; Methylcellulosen; Alkylphosphate, insbesondere Mono- und Diphosphorsäurealkylester; Sulfate, insbesondere Alkylsulfate und Alkylethersulfate; Sulfonate, weitere Alkyl- und Alkylarylsulfonate, insbesondere Alkali-, Erdalkali- und Ammoniumsalze von Arylsulfonsäuren sowie alkylsubstituierten Arylsulfonsäuren, Al-kylbenzolsulfonsäuren, wie beispielsweise Lignin- und Phenolsulfonsäure, Naphthalin- und Dibutylnaphthalinsulfonsäuren, oder Dodecylbenzolsulfonate, Alkylnaphthalinsulfonate, Alkylmethylestersulfonate, Kondensationsprodukte von sulfoniertem Naphthalin und Derivaten davon mit Formaldehyd, Kondensationsprodukte von Naphthalinsulfonsäuren, Phenol- und/oder Phenolsulfonsäuren mit Formaldehyd oder mit Formaldehyl und Harnstoff, Mono- oder Dialkylbernsteinsäureestersulfonate; sowie Eiweißhydrolysate und Lignin-Sulfitablaugen. Die zuvor genannten Sulfonsäuren werden vorteilhafterweise in Form ihrer neutralen oder gegebenenfalls basischen Salze verwendet.

Zu den nichtionischen Tensiden gehören beispielsweise:
- Fettalkoholalkoxylate und Oxoalkoholalkoxylate, insbesondere Ethoxylate und Propoxylate mit Alkoxylierungsgraden von üblicherweise 2 bis 100 und insbesondere 3 bis 50, z. B. Alkoxylate von C₈-C₃₀-Alkanolen oder Alk(adi)enolen, z.B. von iso-Tridecylalkohol, Laurylalkohol, Oleylalkohol oder Stearylalkohol sowie deren C₁-C₄-Alkylether und C₁-C₄-Alkylester z.B. deren Acetate;
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Alkylphenolalkoxylate, wie beispielsweise ethoxyliertes iso-Octyl-, Octyl- oder Nonyl-phenol, Tributylphenol-polyoxyethylenether,
- Fettaminalkoxylate, Fettsäureamid- und Fettsäurediethanol-amidalkoxylate, insbesondere deren Ethoxylate,
- Zuckertenside, Sorbitester, wie beispielsweise Sorbitanfettsäureester (Sorbitanmonooleat, Sorbitantristearat), Polyoxy-ethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den amphoteren Tensiden gehören beispielsweise Sulfobetaine, Carboxybetaine und Alkyldimethylaminoxide, z. B. Tetradecyldimethylaminoxid.

Weitere Tenside, die hier beispielhaft genannt werden sollen, sind Perfluortenside, Silikontenside, Phospholipide, wie beispielsweise Lecithin oder chemisch modifizierte Lecithine, Aminosäuretenside, z. B. N-Lauroylglutamat.

Sofern nicht spezifiziert, handelt es sich bei den Alkylketten der oben aufgeführten Tenside um lineare oder verzweigte Reste mit üblicherweise 6 bis 30 und insbesondere 8 bis 20 Kohlenstoffatomen.

In einer Ausführungsform enthalten die wässrigen Zubereitungen nicht mehr als 10 Gew.-%, vorzugsweise nicht mehr als 5 Gew.-% und insbesondere nicht mehr als 3 Gew.-%, z. B. 0,01 bis 5 Gew.-% oder 0,1 bis 3 Gew.-% an konventionellen oberflächenaktiven Substanzen, jeweils bezogen auf die Gesamtmenge an Wirkstoff und Copolymer CP.

Je nach Anwendung kann es jedoch von Vorteil sein, wenn die Wirkstoffzubereitungen mit oberflächenaktiven Substanzen formuliert werden. Dann liegt der Anteil an konventioneller oberflächenaktiver Substanz häufig im Bereich von 0,1 bis 60 Gew.-%, insbesondere im Bereich von 0,5 bis 50 Gew.-%, bezogen auf die Gesamtmenge an Wirkstoff und Copolymer CP, bzw. im Bereich von 0,1 bis 60 Gew.-%, insbesondere im Bereich von 0,5 bis 50 Gew.-% und speziell im Bereich von 0,5 bis 30 Gew.-%, bezogen auf das Gesamtgewicht der formulierten Zubereitung.

Auch wenn ein Vorteil der Zubereitungen ihr geringer Gehalt an flüchtigen organischen Substanzen ist, kann es für einige Anwendungen erwünscht sein, die Zubereitungen mit organischen Lösungsmitteln, Ölen und Fetten, vorzugsweise solchen Lösungsmitteln oder Ölen und Fetten, die umweltverträglich oder biokompatibel sind, z.B. die vorgenannten mit Wasser mischbaren Lösungsmittel oder Lösungsmittel, Ölen oder Fetten die mit Wasser nicht oder nur sehr begrenzt mischbar sind, abzumischen. Hierzu zählen z. B.:
- Paraffinöle, aromatische Kohlenwasserstoffe und aromatische Kohlenwasserstoffgemische, z. B Xylole, Solvesso 100, 150 oder 200, und dergleichen,
- Phenole und Alkylphenole, z.B. Phenol, Hydrochinon, Nonylphenol, etc.
- Ketone mit mehr als 4 C-Atomen wie Cyclohexanon, Isophoron, Isopheron, Acetophenon, Acetonaphthon,
- Alkohole mit mehr als 4 C-Atomen wie acetylierter Lanolinalkohol, Cetylalkohol, 1-Decanol, 1-Heptanol, 1-Hexanol, Isooctadecanol, Isopropylalkohol, Oleylalkohol, Benzylalkohol,
- Carbonsäureester, z.B. Adipinsäuredialkylester wie Adipinsäurebis(2-ethylhexyl)ester, Phthalsäuredialkylester wie Phthalsäurebis(2-ethylhexyl)ester, Essigsäurealkylester (auch verzweigte Alkylgruppen) wie Ethylacetat und Acetoessigsäureethylester, Stearate wie Butylstearat, Glycerinmonostearat, Citrate wie Acetyltributylcitrat, weiterhin Cetyloctanoat, Methyloleat, Methyl-p-hydroxybenzoat, Methyltetradecanoat, Propyl-p-hydroxybenzoat, Methylbenzoat, Milchsäureester wir Isopropyllacttat, Butyllactat und 2-Ethylhexyllactat,
- Pflanzenöle wie Palmöl, Rapsöl, Rizinusöl und Derivate davon wie z.B. oxydiert, Kokusnussöl, Lebertran, Maiskeimöl, Sojabohnenöl, Leinsamenöl, Olivenöl, Erdnussöl, Färberdistelöl, Sesamsamenöl, Grapefruitöl, Basilikumöl, Aprikosenöl, Ingweröl, Geranienöl, Orangenöl, Rosmarienöl, Macadamiaöl, Zwiebelöl, Mandarinenöl, Kiefernöl, Sonnenblumenöl,
- hydrogenierte Pflanzenöle wie hydrogeniertes Palmöl, hydrogeniertes Rapsöl, hydrogeniertes Sojabohnenöl,
- tierische Öle wie Schweinefettöl, Fischöle,
- Dialkylamide mittel bis langkettiger Fettsäuren z. B. Hallcomide sowie
- Pflanzenölester wie Rapsölmethylester.

Geeignete Verdicker sind Verbindungen, die wässrigen Zubereitungen ein pseudoplastisches Fließverhalten verleihen, d. h. hohe Viskosität im Ruhezustand und niedrige Viskosität im bewegten Zustand. Hier sind beispielsweise Polysaccharide wie Xanthan (Kelzan^{®} der Fa. Kelco; Rhodopol^{®} 23 von Rhone Poulenc; oder Veegum^{®} der Firma R.T. Vanderbilt) sowie anorganische Schichtmineralien wie Attaclay^{®} (Firma Engelhardt) zu nennen, wobei Xanthan bevorzugt verwendet wird.

Als für die Zubereitungen geeignete Antischaummittel kommen beispielsweise Silikonemulsionen (wie z. B. Silikon^{®} SRE, Firma Wacker oder Rhodorsil^{®} der Firma Rhodia), langkettige Alkohole, Fettsäuren, fluororganische Verbindungen und deren Gemische in Betracht.

Bakterizide können zur Stabilisierung den Zubereitungen gegen Befall mit Mikroorganismen zugesetzt werden. Hierbei handelt es sich typischerweise um Isothiazolon-Verbindungen, z.B. 1,2-Benzisothiazolin-3-on, 5-Chlor-2-methylisothiazol-3-on, 2-Methylisothiazol-3-on oder 2-Octylisothiazol-3-on, die beispielsweise unter den Handelsbezeichnungen Proxel^{®} der Fa. Arch Chemical Inc., Ac-ticide^{®} RS der Fa. Thor Chemie und Kathon^{®} MK der Firma Rohm & Haas erhältlich sind.

Geeignete Frostschutzmittel sind organische Polyole, z. B. Ethylenglycol, Propylenglycol oder Glycerin. Diese werden in wässrigen Formulierungen eingesetzt, üblicherweise in Mengen von nicht mehr als 20 Gew.-%, z.B. 1 bis 20 Gew.-% und insbesondere 2 bis 10 Gew.-%, bezogen auf das Gesamtgewicht der wässrigen Wirkstoffzubereitung.

Gegebenenfalls können die Wirkstoffzubereitungen 1 bis 5 Gew.-%, bezogen auf die Gesamtmenge der hergestellten Zubereitung, Puffer zur pH-Wert Regulation der Zubereitung oder der verdünnten Applikationsform enthalten, wobei sich die Menge und Art des eingesetzten Puffers nach den chemischen Eigenschaften und der Menge der Wirkstoffe und des Polymers CP richtet. Beispiele für Puffer sind Alkalisalze schwacher anorganischer oder organischer Säuren wie z. B. Phosphorsäure, Borsäure, Essigsäure, Propionsäure, Citronensäure, Fumarsäure, Weinsäure, Oxalsäure und Bernsteinsäure.

Beispiele für Rieselhilfsmittel sind insbesondere Kieselsäure, speziell pyrogene Kieselsäure und Fällungskieselsäure sowie Calciumcarbonat und Magnesiumstearat. Die Menge an Rieselhilfsmittel beträgt, sofern vorhanden, typischerweise bis 5 Gew.-%, insbesondere bis 2 Gew.-%, z.B. 0,1 bis 5 Gew.-% oder 0,2 bis 2 Gew.-%, bezogen auf das Gesamtgewicht der Zusammensetzung.

Als Trägerstoffe kommen grundsätzlich alle flüssigen und festen Substanzen in Betracht, die üblicherweise in Formulierungen für den Pflanzenschutz oder Materialschutz, insbesondere in Formulierungen von Fungiziden zum Einsatz kommen und die typischerweise chemisch inert sind. Flüssige Trägerstoffe sind insbesondere Wasser sowie Mischungen von Wasser mit organischen, mit Wasser mischbaren Lösungsmitteln. Feste Trägerstoffe sind z.B. Silikate und Alumosilikate einschließlich Bolus, Löß, Tone und Tonerden, z.B. Phyllosilikate und Tektosilikate wie Montmorillonit, Hektorit, Saponit, Beidellit, Sauconit, Bentonit, Talk, Kaolin, Attapulgit, weiterhin amorphe Silikate und Kieselsäuren wie Kieselgele, Kieselgur, z.B. in Form von Diatomeenerde, Fällungskieselsäure, künstliche Silikate und Alumosilikate wie Zeolithe, weiterhin Kalkstein, Kalk, Kreide, Dolomit, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe. Vorzugsweise sind die festen Trägerstoffe in Wasser löslich oder dispergierbar.

Eine weitere bevorzugte Ausführungsform der Erfindung betrifft Zubereitungen in fester Form. Der Gesamtmenge an Wirkstoff (Wirkstoff 1 + Wirkstoff 2) liegt in der Regel im Bereich von 5 bis 90 Gew.-%, insbesondere 10 bis 70 Gew.-% und speziell 15 bis 60 Gew.-%, bezogen auf das Gesamtgewicht der Zubereitung. Der Anteil an Copolymer CP beträgt üblicherweise 5 bis 95 Gew.-%, insbesondere 10 bis 90 Gew.-% und speziell 20 bis 85 Gew.-%, bezogen auf das Gesamtgewicht der Zubereitung. Der Anteil an Hilfsmitteln und festen Trägerstoffen kann bis zu 90 Gew.-%, insbesondere bis 80 Gew.-% und speziell bis 65 Gew.-% der festen Zubereitung ausmachen. Es versteht sich von selber, dass in den festen Formulierungen der Anteil an flüssigen, von Wirkstoff 1 und 2 verschiedenen Bestandteilen, insbesondere flüssigen Lösungsmittelbestandteilen in der Regel nicht mehr als 20 Gew.-% der Formulierung, insbesondere nicht mehr als 10 Gew.-% und speziell nicht mehr als 1 Gew.-% ausmacht.

Die festen Zubereitungen können in unterschiedlichen makroskopischen Formen vorliegen. Als Beispiele für makroskopische Formen seien Pulver, wie sie beispielsweise durch Sprühtrocknung oder Gefriertrocknung flüssiger Formulierungen erhalten werden, Mahlgut, Granulate, Agglomerate oder auch Film genannt. Bevorzugt sind Pulver.

Eine erste Ausgestaltung fester Zubereitungen sind solche, die im wesentlichen keinen festen Träger enthalten und die im wesentlichen, d.h. zu wenigstens 95 % und insbesondere zu wenigstens 99 % aus den Wirkstoffen 1 und 2, dem Polymeren CP sowie gegebenenfalls festen, vorzugsweise in Wasser löslichen Hilfsstoffen bestehen. In diesen Formulierungen liegt die Gesamtmenge an Wirkstoff (Wirkstoff 1 + Wirkstoff 2) in der Regel im Bereich von 5 bis 90 Gew.-%, insbesondere 10 bis 70 Gew.-% und speziell 15 bis 60 Gew.-%, bezogen auf das Gesamtgewicht der Zubereitung. Der Anteil an Copolymer CP beträgt üblicherweise 5 bis 95 Gew.-%, insbesondere 10 bis 90 Gew.-% und speziell 20 bis 85 Gew.-%, bezogen auf das Gesamtgewicht der festen, trägerfreien Zubereitung. Der Anteil an Hilfsmitteln kann bis zu 60 Gew.-%, insbesondere bis 80 Gew.-% und speziell bis 65 Gew.-% der festen Zubereitung ausmachen. Sofern die festen Zubereitungen als Pulver vorliegen, können Sie ein Rieselhilfsmittel in den oben genannten Mengen aufweisen. Der Anteil fester, inerter Träger beträgt vorzugsweise nicht mehr als 5 Gew.-%, insbesondere nicht mehr als 1 Gew.-%.

Eine zweite Ausgestaltung fester Zubereitungen sind solche, die neben den Wirkstoffen 1 und 2, dem Polymeren CP sowie gegebenenfalls festen, vorzugsweise in Wasser löslichen Hilfsstoffen wenigstens einen festen Träger aufweisen. In diesen Formulierungen liegt die Gesamtmenge an Wirkstoff (Wirkstoff 1 + Wirkstoff 2) in der Regel im Bereich von 5 bis 80 Gew.-%, insbesondere 10 bis 60 Gew.-% und speziell 15 bis 50 Gew.-%, bezogen auf das Gesamtgewicht der Zubereitung. Der Anteil an Copolymer CP beträgt üblicherweise 5 bis 85 Gew.-%, insbesondere 10 bis 70 Gew.-% und speziell 20 bis 65 Gew.-%, bezogen auf das Gesamtgewicht der festen, trägerfreien Zubereitung. Der Anteil an Trägermaterial beträgt typischerweise 10 bis 90 Gew.-%, 20 bis 80 Gew.-% und insbesondere 30 bis 65 Gew.-%, bezogen auf das Gesamtgewicht der Zusammensetzung. Der Anteil an Hilfsmitteln kann bis zu 80 Gew.-%, insbesondere bis 70 Gew.-% und speziell bis 55 Gew.-% der festen Zubereitung ausmachen. Sofern die festen Zubereitungen als Pulver vorliegen, können Sie ein Rieselhilfsmittel in den oben genannten Mengen aufweisen. Bevorzugte Trägermaterialien sind Silikate, z.B. Phyllosilikate einschließliche Tone wie Montmorillonit, Hektorit, Saponit, Beidellit, Sauconit, Bentonit, Talk, weiterhin amorphe Silikate und Kieselsäuren wie Kieselgele, Kieselgur, z.B. in Form von Diatomeenerde, Fällungskieselsäure, künstliche Silikate wie Zeolithe.

In einer anderen Ausführungsform handelt es sich bei der Zubereitung um eine flüssige oder insbesondere eine wässrige Zubereitung. Neben den Bestandteilen Wirkstoff 1, Wirkstoff 2 und Copolymer CP enthalten derartige Zubereitungen noch einen flüssigen Träger, insbesondere Wasser oder eine Mischung von Wasser mit einem mit Wasser mischbaren organischen Lösungsmittel, wobei der Anteil organischer Lösungsmittel vorzugsweise 20 Gew.-%, bezogen auf das Gesamtgewicht der Zusammensetzung nicht überschreitet.

Beispiele für mit Wasser mischbare organische Lösungsmittel sind C₃-C₄-Ketone wie Aceton und Methylethylketon, cyclische Ether wie Dioxan und Tetrahydrofuran, C₁-C₄-Alkanole wie Methanol, Ethanol, n-Propanol, Isopropanol, n-Butanol, tert.-Butanol, Polyole und deren Mono- und Dimethylether wie Glykol, Propandiol, Ethylenglykolmonomethylether, Diethylenglykol, Diethylenglykolmonomethylether, Diethylenglykoldimethylether, Glycerin, weiterhin C₂-C₃-Nitrile wie Acetonitril und Propionitril, Dimethylsulfoxid, Dimethylformamid, Formamid, Acetamid, Dimethylacetamid, Butyrolacton, 2-Pyrrolidon und N-Methylpyrrolidon.

In den flüssigen, insbesondere wässrigen Konzentraten (Flüssigformulierungen) liegt die Gesamtmenge an Wirkstoff (Wirkstoff 1 + Wirkstoff 2) in der Regel im Bereich von 1 bis 50 Gew.-%, insbesondere bei 5 bis 40 Gew.-% und speziell bei 7 bis 35 Gew.-%, bezogen auf das Gesamtgewicht der Zubereitung. Der Menge an Copolymer CP beträgt üblicherweise 3 bis 50 Gew.-%, insbesondere 5 bis 45 Gew.-% und speziell 10 bis 40 Gew.-%, bezogen auf das Gesamtgewicht der Zubereitung. Der Anteil an Hilfsmitteln kann bis zu 30 Gew.-%, insbesondere bis 20 Gew.-% und speziell bis 10 Gew.-% der flüssigen Zubereitung ausmachen. Typische Hilfsmittel für flüssige Zubereitungen sind beispielsweise Verdickungsmittel, Entschäumer, Konservierungsmittel, Frostschutzmittel, Biozide, Mittel zur Einstellung des pH-Werts und oberflächenaktiven Substanzen. Der Feststoffgehalt liegt typischerweise im Bereich von 5 bis 70 Gew.-%, insbesondere 10 bis 60 Gew.-% und speziell 20 bis 55 Gew.-%. Der Anteil an mit Wasser nicht mischbaren flüchtigen Bestandteilen beträgt vorteilhafterweise nicht mehr als 5 Gew.-%, insbesondere nicht mehr als 1 Gew.-%, bezogen auf das Gesamtgewicht der wässrigen Flüssigformulierung.

In den wässrigen Zubereitungen liegen die Wirkstoffe 1 und 2 und das Copolymer CP in der wässrigen Phase in fein verteilter Form vor. Die mittlere Teilchengröße, bestimmt mittels Lichtstreuung liegt in den Konzentraten typischerweise unterhalb 1 µm, insbesondere unterhalb 500 nm und speziell unterhalb 300 nm.

Unter wässriger Phase wird reines Wasser oder Wasser, das gelöste Zusätze z.B. ein Puffersystem oder Salze oder weitere Zusatzstoffe wie beispielsweise mit Wasser mischbare Lösungsmittel enthält, verstanden. Der pH-Wert der wässrigen Phase liegt im allgemeinen im Bereich von 2 bis 13, bevorzugt von 3 bis 12, besonders bevorzugt von 4 bis 10.

Typischerweise enthalten die wässrigen Formulierungen wenigstens eines der oben angegebenen Frostschutzmittel, gegebenenfalls eines oder mehrere der oben angegebenen Biozide, gegebenenfalls einen oder mehrere der oben angegebenen Verdicker, gegebenenfalls ein oder mehrere der oben angegebenen Mittel zur Einstellung des pH-Wertes (Puffer), gegebenenfalls einen oder mehrere der oben angegebenen Entschäumer und gegebenenfalls eine oder mehrere der oben angegebenen oberflächenaktiven Substanzen.

Die Zubereitungen umfassen typischerweise das innige Vermischen der in den Zubereitungen enthaltenen Bestandteile nach üblichen Verfahren. Dieses Verfahren wird im Folgenden als Verfahren 1 bezeichnet.

In einer bevorzugten Ausführungsform erreicht man ein inniges Vermischen durch ein Verfahren, umfassend
i) das Bereitstellen einer Lösung des Wirkstoffs 1, des Copolymeren CP und des wenigstens einen weiteren Wirkstoffs 2 in einem organischen Lösungsmittel und anschließend
ii) das weitgehende oder vollständige Entfernen des organischen Lösungsmittels.

Befindet sich das Copolymer CP herstellungsbedingt bereits in einem organischen Lösungsmittel, so wird bevorzugt diese Lösung zur Mischung mit dem Wirkstoff oder der Wirkstofflösung herangezogen.

In einem ersten Schritt des Verfahrens 1 stellt man eine Lösung des Copolymers und des mindestens einen weiteren Wirkstoffes in einem geeigneten organischen Lösungsmittel her. Hierzu wird man in der Regel so vorgehen, dass man eine erste Lösung des Copolymeren CP in einem ersten organischen Lösungsmittel mit einer oder zwei getrennter Lösungen der Wirkstoffe 1 und 2 in einem organischen Lösungsmittel miteinander vermischt, wobei die Lösungen bereits weitere Hilfs- und Zusatzstoffe enthalten können. Auch kann man die Hilfs- und Zusatzstoffe zu einem späteren Zeitpunkt zufügen. Die zur Herstellung der Lösungen verwendeten Lösungsmittel können gleich oder verschieden sein, wobei man typischerweise Lösungsmittel wählen wird, die miteinander mischbare sind. Das Herstellen einer Lösung des Copolymeren CP kann entfallen, wenn die Synthese des Copolymeren CP in einem Lösungsmittel durchgeführt wird, das zum Einsatz im Verfahren zur Herstellung der Formulierung geeignet ist.

Beispiele für diesen Zweck geeigneter organischer Lösungsmittel sind C₁-C₆-Alkylalkohole wie Methanol, Ethanol, Propanol, Isopropanol, 1-Butanol, 2-Butanol, tert-Butanol, Ester aliphatischer C₁-C₄-Carbonsäuren mit C₁-C₄-Alkanolen wie Ethylacetat, Butylacetat, Ketone mit vorzugsweise 3 bis 6 C-Atomen wie Aceton, Methylethylketon, Methylisopropylketon, Methylisobutylketon, Acetale, Di- C₁-C₄-alkylether wie Diethylether, Methyl-tert.-butylether, cyclische Ether wie Tetrahydrofuran, aliphatische C₁-C₄-Carbonsäuren wie Ameisensäure, Essigsäure, Propionsäure, N-substituierte oder N,N-disubstituierte- C₁-C₄-Carbonsäureamide wie Acetamid, Dimethylformamid (DMF) und Dimethylpropionamid, Lactame wie N-Methylpyrrolidon, Lactone wie beispielsweise Butyrolacton, aliphatische und aromatische Chlorkohlenwasserstoffe wie Methylenchlorid, Chloroform, 1,2-Dichlorethan oder Chlorbenzol, sowie Mischungen der genannten Lösungsmittel. Bevorzugte organische Lösungsmittel sind Methanol, Ethanol, Isopropanol, Dimethylformamid, N-Methylpyrrolidon, Methylenchlorid, Chloroform, 1,2-Dichlorethan, Chlorbenzol, Aceton, Methylethylketon, Methylisopropylketon, Methylisobutylketon, Tetrahydrofuran sowie Mischungen dieser Lösungsmittel. Besonders bevorzugte Lösungsmittel sind Methanol, Ethanol, Isopropanol, Dimethylformamid und Tetrahydrofuran und deren Mischungen.

In einem zweiten Schritt wird/werden das/die Lösungsmittel durch geeignete Verfahren in üblicher Weise weitestgehend entfernt. Übliche Verfahren zur Entfernung von Lösungsmitteln sind beispielsweise Sprühtrocknung, Verdampfen bei erniedrigtem Druck, Gefriertrocknung, Verdampfen unter Atmosphärendruck bei gegebenenfalls erhöhter Temperatur. Zu den für die Trocknung geeigneten Verfahren gehören weiterhin Lyophilisierung oder Trocknen in einem Fließbetttrockner. Man erhält hierdurch die Wirkstoffformulierungen in fester Form.

Auf diese Weise erhält man in der Regel eine feste, zähflüssige oder gelförmige Zusammensetzung. Sofern nach dem Entfernen des Lösungsmittels ein Feststoff erhalten wird, kann man je nach Trocknungsbedingungen in an sich bekannter Weise feinteilige Pulver oder grobteilige Granulate hergestellt werden, die sich ohne weiteres in Wasser lösen oder dispergieren lassen, ohne dass eine nennenswerte Teilchenvergrößerung eintritt. Auch kann man einen grobteiligen Feststoff herstellen und diesen auf die gewünschte Teilchengröße vermahlen.

Zur Herstellung eines festen Formulierung, die einen Träger enthält, kann man beispielsweise auch so vorgehen, dass man
i) eine oder mehrere separate Lösungen des Wirkstoffs 1, des Copolymeren CP, des wenigstens einen weiteren Wirkstoffs 2 und gegebenenfalls der Hilfsmittel in einem oder mehreren verschiedenen organischen Lösungsmitteln bereitstellt,
ii) diese Lösungen mit dem Träger vermischt oder auf den Träger aufbringt und
iii) das (die) organische(n) Lösungsmittel weitgehend oder vollständig entfernt.

Dieses Verfahren, das im Folgenden auch als Verfahren 2 bezeichnet wird, eignet sich in besonderer Weise dann, wenn ohne Verwendung eines Trägers ein zähflüssiges oder gelförmiges Produkt erhalten wird.

Vorteilhafterweise wird man bei Verfahren 2 so vorgehen, dass man die Lösung(en) auf den Träger durch ein Sprühverfahren, z.B. durch ein Sprühtrocknungs- oder Sprühgranulierungsverfahren auf den Träger aufbringt, wobei gleichzeitig das (die) Lösungsmittel verdampft wird (werden). Die Hilfsmittel können ebenfalls auf diese Weise auf den Träger aufgebracht werden oder zu einem späteren Zeitpunkt zugegeben werden.

Bezüglich der Lösungen der Wirkstoffe 1 und 2, des Copolymeren CP und der Hilfsstoffe gilt grundsätzlich das zuvor für Verfahren 1 Gesagte analog.

Die Herstellung wässriger Zubereitungen umfasst typischerweise das Einarbeiten der Wirkstoffe 1 und 2, des Copolymeren CP und etwaiger Hilfsmittel in ein wässriges Dispergiermedium. Das Verfahren kann beispielsweise die folgenden Schritte umfassen:
i) Bereitstellen einer Lösung, enthaltend die Wirkstoffe 1 und 2, das Copolymere CP und gegebenenfalls einen Teil oder die Gesamtmenge der Hilfsstoffe in einem vorzugsweise mit Wasser mischbaren organischen Lösungsmittel, eine Schmelze der vorgenannten Bestandteile oder ein Pulver aus den vorgenannten Bestandteilen,
ii) Einarbeiten der Lösung, der Schmelze oder des Pulvers in ein wässriges Dispergiermedium und
iii) sofern anwesend, weitgehendes oder vollständiges Entfernen des organischen Lösungsmittels.

Zur Herstellung der wässrigen Zubereitungen wird man wahlweise die in Schritt i) erhaltene Lösung oder Schmelze oder das Pulver in Wasser oder einem wässrigen Medium dispergieren. Unter einem wässrigen Medium versteht man Wasser, eine wässrige Lösung von oberflächenaktiven Substanzen sowie Mischungen von Wasser mit organischen Lösungsmitteln, die mit Wasser mischbar sind, wobei der Anteil derartiger Lösungsmittel typischerweise nicht mehr als 20 Vol.-%, bezogen auf die Gesamtmenge aus Wasser und Lösungsmittel ausmacht.

Das Dispergieren erfolgt üblicherweise durch Anwendung von Scherkräften, z.B. durch hochfrequentes und hochamplitudiges Schütteln oder hochfrequentes Rühren, Turbinieren oder durch Verwendung einer Mischkammer. Das Dispergieren kann in kontinuierlicher oder diskontinuierlicher Art und Weise erfolgen. Bevorzugt ist kontinuierliches Dispergieren. Das Dispergieren kann gegebenenfalls unter Anwendung erhöhter Temperatur und/oder erhöhtem Druck erfolgen.

Vorzugsweise ist das zur Herstellung der Lösung eingesetzte organische Lösungsmittel mit Wasser mischbar. Mischbar mit Wasser bedeutet in diesem Zusammenhang, dass die organischen Lösungsmittel unter den Mischungsbedingungen ohne Phasenseparation zu mindestens 10 Gew.-%, bevorzugt zu 15 Gew.-%, besonders bevorzugt zu 20 Gew.-% mit Wasser mischbar sind. Beispiele für mit Wasser mischbare organische Lösungsmittel sind die zuvor genannten, insbesondere cyclische Ether wie Tetrahydrofuran.

Sofern man eine Lösung der Wirkstoffe 1 und 2 und des Copolymeren CP in Wasser dispergiert hat, wird man dann das organische Lösungsmittel weitgehend oder vollständig entfernen. Dies geschieht typischerweise auf destillativem Wege, wobei man üblicherweise abdestilliertes Wasser sukzessive ersetzt.

In einem anderen, ebenfalls bevorzugten Verfahren umfasst die Herstellung wässriger Zubereitungen die folgenden Schritte:
i) Bereitstellen einer wässrigen Lösung, enthaltend das Copolymer CP,
ii) Bereitstellen einer oder zweier separater Lösungen, enthaltend Wirkstoff 1 und den wenigstens einen weiteren Wirkstoff 2 in einem oder mehreren mit Wasser mischbaren organischen Lösungsmitteln,
iii) Vermischen der wässrigen Lösung des Copolymeren CP mit der(den) Lösung(en) der Wirkstoffe 1 und 2, und
iv) weitgehendes oder vollständiges Entfernen des (der) organischen Lösungsmittel(s).

In einem ersten Schritt werden das Copolymer CP und gegebenenfalls weitere Zusatzstoffe in einem wässrigen Lösungsmittelsystem gelöst. Wird herstellungsbedingt bereits eine wässrige Lösung des Copolymers erhalten, so wird bevorzugt diese wässrige Lösung zur Mischung mit der Wirkstofflösung herangezogen. Des Weiteren werden Wirkstoff 1 und Wirkstoff 2 in einem mit Wasser mischbaren Lösungsmittel gegebenenfalls unter Hinzufügen weiterer Hilfsstoffe gelöst. Die wässrige Lösung des Copolymeren CP wird dann mit der Lösung von Epoxiconazol und dem Wirkstoff 2 gemischt.

Vorteilhaft erfolgt das Vermischen unter Energieeintrag wie beispielsweise durch Anwendung von Scherkräften, durch hochfrequentes und hochamplitudiges Schütteln oder hochfrequentes Rühren, Turbinieren oder durch Verwendung einer Mischkammer. Das Mischen kann in kontinuierlicher oder diskontinuierlicher Art und Weise erfolgen. Bevorzugt ist kontinuierliches Mischen. Die auf diese Art erhaltene Dispersion kann in üblicher Weise wie oben ausgeführt von den Lösungsmitteln befreit werden.

Die Zubereitungen zeichnen sich zum einen dadurch aus, dass sie beim Verdünnen mit Wasser eine äußerst feinteilige Verteilung der dispergierten Wirkstoffphase gewährleisten, wobei die mittlere Teilchengröße der dispergierten Wirkstoffphase in den oben angegebenen Bereichen liegt. Die Wirkstoffzubereitungen verlieren diese Eigenschaften auch bei längerer Lagerung und/oder Lagerung bei erhöhter Temperatur nicht. Die Verwendung weiterer oberflächenaktiver Verbindungen ist hierfür nicht erforderlich. Ebenfalls können die Zubereitungen lösungsmittelarm (Lösungsmittelgehalt < 5 Gew.-%) oder lösungsmittelfrei (Lösungsmittelgehalt < 1 Gew.-%, insbesondere < 0, 5 Gew.-%) formuliert werden. Die Zubereitungen können ohne Entmischung über einen längeren Zeitraum von mehren Monaten auch bei erhöhter Temperatur und/oder bei stark wechselnden Temperaturen gelagert werden. Auch treten Kristallisationsphänomene, wie sie teilweise bei Formulierungen einiger Conazolfungizide und insbesondere bei Formulierungen des Epoxiconazols auftreten können, nicht auf.

Die Zubereitungen eignen sich in besonderer Weise zur Bekämpfung pflanzenpathogener Pilze und sind dabei üblichen Formulierungen von Wirkstoff 1 und 2 zumindest ebenbürtig und häufig überlegen. Die Zubereitungen zeichnen sich durch eine hervorragende Wirksamkeit gegen ein breites Spektrum von pflanzenpathogenen Pilzen, insbesondere aus der Klasse der *Ascomyceten, Deuteromyceten* und *Basidiomyceten* aus.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Bananen, Baumwolle, Soja, Kaffee, Zuckerrohr, Wein, Obst- und Zierpflanzen und Gemüsepflanzen wie Gurken, Bohnen, Tomaten, Kartoffeln und Kürbisgewächsen, sowie an den Samen dieser Pflanzen.

Speziell eignen sie sich zur Bekämpfung folgender Pflanzenkrankheiten:
- *Alternaria*-Arten an Gemüse und Obst,
- *Bipolaris-* und Drechslera-Arten an Getreide, Reis und Rasen,
- *Blumeria graminis* (echter Mehltau) an Getreide,
- *Botrytis cinerea* (Grauschimmel) an Erdbeeren, Gemüse, Zierpflanzen und Reben,
- *Erysiphe cichoracearum* und *Sphaerotheca fuliginea* an Kürbisgewächsen,
- *Fusarium-* und *Verticillium*-Arten an verschiedenen Pflanzen,
- *Mycosphaerella*-Arten an Getreide, Bananen und Erdnüssen,
- *Phytophthora infestans* an Kartoffeln und Tomaten,
- *Plasmopara viticola* an Reben,
- *Podosphaera leucotricha* an Äpfeln,
- *Pseudocercosporella herpotrichoides* an Weizen und Gerste,
- *Pseudoperonospora*-Arten an Hopfen und Gurken,
- *Puccinia*-Arten an Getreide,
- *Pyricularia oryzae* an Reis,
- *Rhizoctonia*-Arten an Baumwolle, Reis und Rasen,
- *Septoria tritici* und *Stagonospora nodorum* an Weizen,
- *Uncinula necator* an Reben,
- Ustilago-Arten an Getreide und Zuckerrohr, sowie
- Venturia-Arten (Schorf) an Äpfeln und Birnen.

Die Zubereitungen eignen sich außerdem zur Bekämpfung von Schadpilzen wie *Paecilomyces variotii* im Materialschutz (z.B. Holz, Papier, Dispersionen für den Anstrich, Fasern bzw. Gewebe) und im Vorratsschutz.

Die Zubereitungen werden typischerweise angewendet, indem man die Pilze oder die vor Pilzbefall zu schützenden Pflanzen, Saatgüter, Materialien oder den Erdboden mit einer verdünnten wässrigen Aufbereitung der Zubereitungen behandelt, welche eine fungizid wirksamen Menge der Wirkstoffe 1 und 2 enthalten. Die Anwendung kann sowohl vor als auch nach der Infektion der Materialien, Pflanzen oder Samen durch die Pilze erfolgen.

Die Wirkstoffkonzentrationen in den wässrigen Aufbereitungen können in größeren Bereichen variiert werden. Im Allgemeinen liegen sie zwischen 0,0001 und 1%, vorzugsweise zwischen 0,0005 und 0,1 %.

Die Aufwandmengen liegen bei der Anwendung im Pflanzenschutz je nach Art des gewünschten Effektes zwischen 0,01 und 2,0 kg Wirkstoff pro ha.

Bei der Saatgutbehandlung werden im allgemeinen Wirkstoffmengen von 1 bis 1000 g/100 kg Saatgut, vorzugsweise 1 bis 200 g/100 kg, insbesondere 5 bis 100 g/100 kg verwendet.

Bei der Anwendung im Material- bzw. Vorratsschutz richtet sich die Aufwandmenge an Wirkstoff nach der Art des Einsatzgebietes und des gewünschten Effekts. Übliche Aufwandmengen sind im Materialschutz beispielsweise 0,001 g bis 2 kg, vorzugsweise 0,005 g bis 1 kg Wirkstoff pro Kubikmeter behandelten Materials.

Die folgenden Beispiele dienen der Erläuterung der Erfindung und sind nicht einschränkend zu verstehen.

### Analytik:

Die Bestimmung der Glasübergangstemperatur erfolgte mittels eines DSC-Gerätes DSC30 der Fa. Mettler bei einer Aufheizrate von 10 K/min.

Die Bestimmung der Molekulargewichte erfolgte mittels Gelpermeationschromatographie (Gerät "Series 1100" der Fa. Agilent) unter Verwendung eines RI-Detektors und einer 5µ Mixed-D-Säule der Fa. PL bei 30°C (Säulentemperatur). Als Eluent diente unter Verwendung von Dimethylformamid, das 0,5 % Lithiumbromid enthielt. Die Flußrate betrug 1 ml/min. Die Eichung erfolgte mittels Polymethylmethacrylat-Eichsätzen.

### Herstellung der Copolymere CP

### Herstellungsbeispiel 1: Copolymer CP1 (nicht erfindungsgemäß)

In einem Reaktionsgefäß legte man 250 g DMF vor und erwärmte auf 90°C. Hierzu gab man unter Beibehaltung der Temperatur innerhalb von 3 h parallel Zulauf 1, bestehend aus 49,5 g 2-Acrylamido-2-methylpropansulfonsäure, 96,1 g 2-Hydroxyethylacrylat, 145,6 g n-Butylacrylat und 148,5 g DMF, sowie Zulauf 2, bestehend aus 8,74 g AIBN und 301,5 g DMF, zu. Nach Beendigung der Zuläufe polymerisierte man weitere 2 h bei 95°C.

### Herstellungsbeispiel 2: Copolymer CP2 (nicht erfindungsgemäß)

In einem Reaktionsgefäß legte man 300 g DMF vor und erwärmte auf 90°C. Hierzu gab man unter Beibehaltung der Temperatur innerhalb von 3 h parallel Zulauf 1, bestehend aus 36,0 g 2-Acrylamido-2-methylpropansulfonsäure, 184,0 g 2-Hydroxyethylacrylat, 180,0 g n-Butylacrylat und 148,5 g DMF, sowie Zulauf 2, bestehend aus 12,0 g AlBN und 120 g DMF, zu. Nach Beendigung der Zuläufe polymerisierte man weitere 2 h bei 95°C.

### Herstellungsbeispiel 3: Copolymer CP3 (nicht erfindungsgemäß)

In einem Reaktionsgefäß legte man unter Inertgas 300 g DMF vor und erwärmte auf 90°C. Hierzu gab man unter Beibehaltung der Temperatur innerhalb von 3 h parallel Zulauf 1, bestehend aus 36,0 g 2-Acrylamido-2-methylpropansulfonsäure, 192,0 g 2-Hydroxyethylacrylat, 172,0 g n-Butylacrylat und 148,5 g DMF, sowie Zulauf 2, bestehend aus 12,0 g AIBN und 120 g DMF, zu. Nach Beendigung der Zuläufe polymerisierte man weitere 2 h bei 95°C.

### Herstellungsbeispiele 4 bis 6

### Allgemeine Herstellungsvorschrift

In einem Synthesereaktor AutoPlant A100 der Fa. Chemspeed^{®} wurden je Reaktionsgefäß 15 ml DMF vorgelegt und auf 95 °C erwärmt. Hierzu wurden unter Rühren und Beibehaltung der Temperatur parallel innerhalb von 180 min Zulauf 1, sowie - zeitgleich mit Zulauf 1 startend - innerhalb von 195 min Zulauf 2 zudosiert. Nach Beendigung der Zuläufe wurde weitere 60 min bei 95 °C nachpolymerisiert.

| Herstellungsbeispiel 4: Copolymer CP4 | |
|---|---|
| Zulauf 1: | Mischung bestehend aus 10,5 g Methylmethacrylat, 3,5 g Laurylacrylat und 7,0 g 2-Acrylamido-2-methylpropansulfonsäure, gelöst in DMF auf 49 ml. |
| Zulauf 2: | 0,63 g 2,2'-Azobis(2-methylpropionitril) gelöst in DMF auf 6 ml. |

| Herstellungsbeispiel 5: Copolymer CP5 (nicht erfindungsgemäß) | |
|---|---|
| Zulauf 1: | Mischung bestehend aus 10,5 g n-Butylacrylat, 7,0 g 2-Hydroxyethylacrylat und 3,5 g 2-Acrylamido-2-methylpropansulfonsäure, gelöst in DMF auf 49 ml. |
| Zulauf 2: | 0,63 g 2,2'-Azobis(2-methylpropionitril) gelöst in DMF auf 6 ml. |

| Herstellungsbeispiel 6: Copolymer CP6 (nicht erfindungsgemäß) | |
|---|---|
| Zulauf 1: | Mischung bestehend aus 17,5 g Methylacrylat und 3,5 g 2-Acrylamido-2-methylpropansulfonsäure, gelöst in DMF auf 49 ml. |
| Zulauf 2: | 0, 63 g 2,2'-Azobis(2-methylpropionitril) gelöst in DMF auf 6 ml. |

### Herstellungsbeispiele 7 bis 9

### Allgemeine Herstellungsvorschrift :

In einem Synthesereaktor Accelerator^{™} SLT100 der Fa. Chemspeed^{®} wurde je Reaktionsgefäß 6,72 ml von Monomerlösung 1 mit 0,21 ml von Initiatorlösung 2 versetzt. Anschließend wurde der Ansatz unter Schütteln 4 h auf 95 °C erhitzt, bevor weitere 0,07 ml von Initiatorlösung 2 zugegeben und die Polymerisation innerhalb von 2 h bei 95 °C abgeschlossen wurde.

| Herstellungsbeispiel 7: CP7 (nicht erfindungsgemäß) | |
|---|---|
| Monomerlösung 1: | Mischung bestehend aus 150 mg Methylmethacrylat, 450 mg |
| | 2-Phenoxyethylacrylat und 300 mg 2-Acrylamido- |
| | 2-methylpropansulfonsäure gelöst in DMF auf 8,64 ml. |
| Initiatorlösung 2: | 100 mg 2,2'-Azobis(2-methylpropionitril) gelöst in DMF auf 1,00 ml. |

| Herstellungsbeispiel 8: CP8 (nicht erfindungsgemäß) | |
|---|---|
| Monomerlösung 1: | Mischung bestehend aus 300 mg Hydroxypropyl-methacrylat, |
| | 300 mg Styrol und 300 mg 2-Acrylamido- |
| | 2-methylpropansulfonsäure gelöst in DMF auf 8,64 ml. |
| Initiatorlösung 2: | 100 mg 2,2'-Azobis(2-methylpropionitril) gelöst in DMF auf 1,00 ml. |

| Herstellungsbeispiel 9: CP9 (nicht erfindungsgemäß) | |
|---|---|
| Monomerlösung 1: | Mischung bestehend aus 450 mg Methylacrylat, 300 mg 1-Vinyl-2- |
| | pyrrolidon und 150 mg 2-Acrylamido-2-methylpropansulfonsäure |
| | gelöst in DMF auf 8,64 ml. |
| Initiatorlösung 2: | 100 mg 2,2'-Azobis(2-methylpropionitril) gelöst in DMF auf 1,00 ml. |

Die Molekulargewichte und Glastemperaturen der Copolymere CP1 bis CP4 sind in Tabelle 1 angegeben:

**Tabelle 1:**

| Copolymer | Mₙ | M_{w} | T_{g} [°C] |
|---|---|---|---|
| CP1 * | 5700 | 11000 | 16 |
| CP2 * | 7600 | 15900 | -6 |
| CP3 * | 7800 | 16800 | -4 |
| CP4 | 12437 | 21853 | n.b. |

| | | | |
|---|---|---|---|
| n.b. nicht bestimmt * nicht erfindungsgemäß | | | |

### Herstellung der Zubereitungen Z1, Z2, Z3, Z4 und Z5:

Allgemeine Herstellungsvorschrift für feste Formulierungen
In einer Lösung von 30 g Copolymer CP in 70 g DMF löste man 10 g eines Wirkstoffgemisches von Epoxiconazol und Pyraclostrobin (Gewichtsverhältnis 5:7 im Fall von Z1, Z2 und Z3; Gewichtsverhältnis 1:1 im Fall von Z5) beziehungsweise von Epoxiconazol und Metconazol (Gewichtsverhältnis 1:1 im Fall von Z4). Man entfernte das Lösungsmittel im Vakuum bei einer Temperatur von 80°C, wobei man eine feste homogene Masse erhielt, die keine kristallinen Bestandteile aufwies.

In Vergleichsversuchen VZ1, VZ2, VZ3 und VZ4 wurde anstelle des Wirkstoffgemischs 10 g reines Epoxiconazol unter den oben angegebenen Bedingungen formuliert. Hierbei erhielt man feste Massen, die jeweils kristalline Bestandteile aufwies.

**Tabelle 2: Zubereitungen der festen Wirkstoffformulierungen**

| Zubereitung | Copolymer | Wirkstoff-Typ | Wirkstoff/Copolymer [g/g]¹⁾ |
|---|---|---|---|
| Z1 ** | CP1 | Epoxiconazol/Pyraclostrobin 5:7¹⁾ | 1:3 |
| Z2 ** | CP2 | Epoxiconazol/Pyraclostrobin 5:7¹⁾ | 1:3 |
| Z3 ** | CP3 | Epoxiconazol/Pyraclostrobin 5:7¹⁾ | 1:3 |
| Z4 | CP4 | Epoxiconazol/Metconazol 1:1¹⁾ | 1:3 |
| Z5 ** | CP4 | Metconazol/Pyraclostrobin 1:1¹⁾ | 1:3 |
| VZ1* | CP1 | Epoxiconazol | 1:3 |
| VZ2* | CP2 | Epoxiconazol | 1:3 |
| VZ3* | CP3 | Epoxiconazol | 1:3 |
| VZ4* | CP4 | Epoxiconazol | 1:3 |

| | | | |
|---|---|---|---|
| *Vergleichsformulierung 1) Gewichtsverhältnis ** nicht erfindungsgemäß | | | |

Beim Verdünnen der Zubereitungen Z1, Z2, Z3, Z4 und Z5 mit Wasser auf eine Wirkstoffkonzentration von 64 ppm erhielt man optisch wasserklare Lösungen. Die mittlere Teilchengröße aller Proben lag daher unterhalb 100 nm. Im Unterschied hierzu wurde beim Verdünnen der Proben VZ1 bis VZ4 die Abscheidung von Feststoff beobachtet.

Zur Bestimmung der Lagerstabilität wurden Proben der Zubereitungen Z1, Z2, Z3, Z4 und Z5 5 Monate bei -10°C, Raumtemperatur bzw. 55°C gelagert. Bei keiner der Proben trat die Bildung von kristallinem Material auf. Alle Proben ließen sich nach dieser Zeit mit Wasser zu optisch wasserklaren Lösungen verdünnen.

### Anwendungstechnische Prüfung

### Untersuchung der fungiziden Wirkung

Die jeweilige Wirkstoffzubereitung wurde als Stammlösung mit einer Konzentration von 64 ppm Wirkstoff aufbereitet und anschließend mit Wasser zu der unten angegeben Wirkstoffkonzentration verdünnt (Tabelle 3).

Blätter von in Töpfen gewachsenen Weizensämlingen der Sorte "Kanzler" wurden mit einer Sporensuspension des Braunrostes (*Puccinia recondita*) inokuliert. Danach wurden die Töpfe für 24 Stunden in eine Kammer mit hoher Luftfeuchtigkeit (90 bis 95 %) und 20 bis 22° C gestellt. Während dieser Zeit keimten die Sporen aus und die Keimschläuche drangen in das Blattgewebe ein. Die infizierten Pflanzen wurden am nächsten Tag mit einer wässrigen Suspension in der unten angegebenen Wirkstoffkonzentration bis zur Tropfnässe besprüht. Die Suspension wurde wie oben beschrieben hergestellt. Nach dem Antrocknen des Spritzbelages wurden die Versuchspflanzen im Gewächshaus bei Temperaturen zwischen 20 und 22° C und 65 bis 70 % relativer Luftfeuchte für 7 Tage kultiviert. Dann wurde das Ausmaß der Rostpilzentwicklung auf den Blättern ermittelt.

## Patentansprüche

1. Copolymer CP in Form eines aus wenigstens drei voneinander verschiedenen monoethylenisch ungesättigten Monomeren M aufgebauten Polymeren, umfassend in einpolymerisierter Form:
α) 5 bis 60 Gew.-%, bezogen auf die Gesamtmenge der Monomere M, wenigstens ein monoethylenisch ungesättigtes Monomer M1, das wenigstens eine Sulfonsäuregruppe aufweist,
ß3) 20 bis 90 Gew.-% , bezogen auf die Gesamtmenge der Monomere M, wenigstens ein monoethylenisch ungesättigtes Monomer M2a(1), das bei 20°C in Wasser eine Löslichkeit im Bereich von 1 bis < 50 g/l aufweist, ausgewählt unter den Estern der Acrylsäure mit C₂-C₄-Alkanolen und den Estern der Methacrylsäure mit C₁-C₄-Alkanolen, und
ß4) 5 bis 60 Gew.-%, bezogen auf die Gesamtmenge der Monomere M, wenigstens ein zweites Monomer M2a(2), das bei 20°C in Wasser eine Löslichkeit unterhalb 1 g/l aufweist und die ausgewählt sind unter C₈-C₁₈-Alkylacrylaten und C₈-C₁₈-Alkylmethacrylaten.

2. Copolymer CP nach Anspruch 1, wobei die Monomere M2a(1) ausgewählt sind unter Methylmethacrylat, Ethylacrylat, Ethylmethacrylat, und n-Propylacrylat.

3. Copolymer CP nach Anspruch 1 oder 2, wobei die Monomere M2a(2) ausgewählt sind unter Decylacrylat, Decylmethacrylat, Laurylacrylat, Laurylmethacrylat, Myristylacrylat, Myristylmethacrylat, Cetylacrylat, Cetylmethacrylat, Stearylacrylat und Stearylmethacrylat.

4. Copolymer nach einem der vorhergehenden Ansprüche, worin die Monomere M1 ausgewählt sind unter Monomeren der allgemeinen Formel I 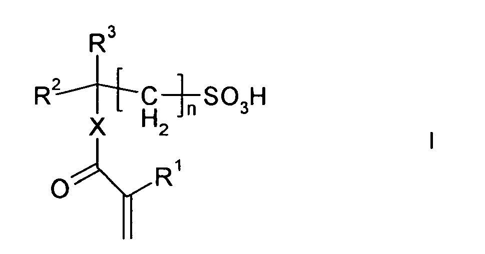 worin
n für 0, 1, 2 oder 3 steht;
X O oder NR⁵ bedeutet;
R¹ für Wasserstoff oder Methyl steht;
R², R³ unabhängig voneinander Wasserstoff oder C₁-C₄-Alkyl bedeuten und
R⁵ Wasserstoff oder C₁-C₄-Alkyl bedeutet.

5. Copolymer CP nach einem der vorhergehenden Ansprüche, das ein zahlenmittleres Molekulargewicht im Bereich von 1000 bis 100000 Dalton aufweist.

6. Copolymer CP nach Anspruch 6, das ein zahlenmittleres Molekulargewicht im Bereich von 5000 bis 20000 Dalton aufweist.

7. Verwendung von Copolymeren CP, wie in Anspruch 1 definiert, zur Herstellung von Wirkstoffzubereitungen, enthaltend
a) wenigstens einen fungiziden Wirkstoff aus der Gruppe der Conazole (Wirk-stoff 1),
b) wenigstens einen weiteren Pflanzenschutzwirkstoff (Wirkstoff 2), der bei 20°C in Wasser eine Löslichkeit unterhalb 20 g/l aufweist
in einem Mengenverhältnis von Wirkstoff 1 zu Wirkstoff 2 im Bereich von 10:1 bis 1:10.

8. Verwendung von Copolymeren CP, wie in Anspruch 1 definiert, zur Stabilisierung wässriger Dispersionen von Wirkstoffgemischen, umfassend
a) wenigstens einen fungiziden Wirkstoff aus der Gruppe der Conazole (Wirk-stoff 1),
b) wenigstens einen weiteren Pflanzenschutzwirkstoff (Wirkstoff 2), der in Wasser eine Löslichkeit unterhalb 20 g/l aufweist
in einem Mengenverhältnis von Wirkstoff 1 zu Wirkstoff 2 im Bereich von 10:1 bis 1:10.

## Claims

1. A copolymer CP in the form of a polymer composed of at least three different monoethylenically unsaturated monomers M, comprising in the form of polymerized units:
α) 5 to 60% by weight, based on the total amount of the monomers M, of at least one monoethylenically unsaturated monomer M1 having at least one sulfonic acid group,
β3) 20 to 90% by weight, based on the total weight of the monomers M, of at least one monoethylenically unsaturated monomer M2a(1) having a solubility in water at 20°C in the range of 1 to < 50 g/l, selected from the group consisting of the esters of acrylic acid with C₂-C₄-alkanols and the esters of methacrylic acid with C₁-C₄-alkanols, and
β4) 5 to 60% by weight, based on the total amount of the monomers M, of at least one second monomer M2a(2) which has a solubility in water at 20°C of less than 1 g/l and which is selected from the group consisting of C₈-C₁₈-alkyl acrylates and C₈-C₁₈-alkyl methacrylates.

2. The copolymer CP according to claim 1, wherein the monomers M2a(1) are selected from the group consisting of methyl methacrylate, ethyl acrylate, ethyl methacrylate and n-propyl acrylate.

3. The copolymer CP according to claim 1 or 2, wherein the monomers M2a(2) are selected from the group consisting of decyl acrylate, decyl methacrylate, lauryl acrylate, lauryl methacrylate, myristyl acrylate, myristyl methacrylate, cetyl acrylate, cetyl methacrylate, stearyl acrylate and stearyl methacrylate.

4. The copolymer according to any of the preceding claims, wherein the monomers M1 are selected from monomers of the general formula I 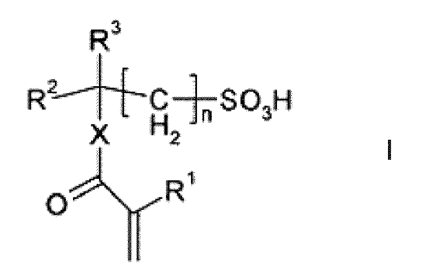 where
n is 0, 1, 2 or 3
X is O or NR⁵
R¹ is hydrogen or methyl
R², R³ are independently hydrogen or C₁-C₄-alkyl and
R⁵ is hydrogen or C₁-C₄-alkyl

5. The copolymer CP according to any of the preceding claims which has a number average molecular weight in the range of 1000 to 100 000 daltons.

6. The copolymer CP according to claim 5 which has a number average molecular weight in the range of 5000 to 20 000 daltons.

7. The use of copolymers CP, as defined in claim 1, for producing active ingredient preparations comprising
a) at least one fungicidally active ingredient from the group of the conazoles (active ingredient 1),
b) at least one further plant protection active ingredient (active ingredient 2) having a solubility in water at 20°C of less than 20 g/l
in a ratio of active ingredient 1 to active ingredient 2 in the range of 10:1 to 1:10.

8. The use of copolymers CP, as defined in claim 1, for stabilizing aqueous dispersions of active ingredient mixtures comprising
a) at least one fungicidally active ingredient from the group of the conazoles (active ingredient 1),
b) at least one further plant protection active ingredient (active ingredient 2) having a solubility in water of less than 20 g/l
in a ratio of active ingredient 1 to active ingredient 2 in the range of 10:1 to 1:10.

## Revendications

1. Copolymère CP sous forme d'un polymère constitué d'au moins trois monomères M à insaturation éthylénique différents entre eux, comprenant sous forme incorporée par polymérisation :
α) 5 à 60 % en poids, par rapport à la quantité totale des monomères M, d'au moins un monomère M1 à insaturation monoéthylénique, qui comporte au moins un groupe sulfo,
β3) 20 à 90 % en poids, par rapport à la quantité totale des monomères M, d'au moins un monomère M2a(1) à insaturation monoéthylénique, qui présente à 20 °C dans l'eau une solubilité dans la plage de 1 à <50 g/l, choisi parmi les esters de l'acide acrylique avec des alcanols en C₂-C₄ et les esters de l'acide méthacrylique avec des alcanols en C₁-C₄, et
β4) 5 à 60 % en poids, par rapport à la quantité totale des monomères M, d'au moins un deuxième monomère M2a(2), qui présente à 20 °C dans l'eau une solubilité inférieure à 1 g/l et qui est choisi parmi des acrylates d'alkyle en C₈-C₁₈ et des méthacrylates d'alkyle en C₈-C₁₈.

2. Copolymère CP selon la revendication 1, dans lequel les monomères M2a(1) sont choisis parmi le méthacrylate de méthyle, l'acrylate d'éthyle, le méthacrylate d'éthyle et l'acrylate de n-propyle.

3. Copolymère CP selon la revendication 1 ou 2, dans lequel les monomères M2a(2) sont choisis parmi l'acrylate de décyle, le méthacrylate de décyle, l'acrylate de lauryle, le méthacrylate de lauryle, l'acrylate de myristyle, le méthacrylate de myristyle, l'acrylate de cétyle, le méthacrylate de cétyle, l'acrylate de stéaryle et le méthacrylate de stéaryle.

4. Copolymère selon l'une quelconque des revendications précédentes, dans lequel les monomères M1 sont choisis parmi des monomères de formule générale I 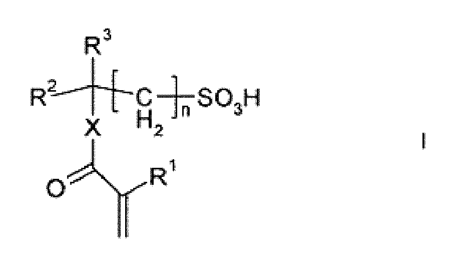 dans laquelle
n représente 0, 1, 2 ou 3 ;
X représente O ou NR⁵ ;
R¹ représente un atome d'hydrogène ou le groupe méthyle ;
R², R³ représente indépendamment l'un de l'autre un atome d'hydrogène ou un groupe alkyle en C₁-C₄ et
R⁵ représente un atome d'hydrogène ou un groupe alkyle en C₁-C₄.

5. Copolymère CP selon l'une quelconque des revendications précédentes, qui présente une masse moléculaire moyenne en nombre dans la plage de 1 000 à 100 000 daltons.

6. Copolymère CP selon la revendication 5, qui présente une masse moléculaire moyenne en nombre dans la plage de 5 000 à 20 000 daltons.

7. Utilisation des copolymères CP, tels que définis dans la revendication 1, pour la production de préparations de substances actives, contenant
a) au moins une substance active fongicide choisie dans le groupe des conazoles (substance active 1),
b) au moins une autre substance active phytosanitaire (substance active 2), qui présente à 20 °C dans l'eau une solubilité inférieure à 20 g/l
en un rapport des quantités de la substance active 1 à la substance active 2 dans la plage de 10:1 à 1:10.

8. Utilisation des copolymères CP, tels que définis dans la revendication 1, pour la stabilisation de dispersions aqueuses de mélanges de substances actives, comprenant
a) au moins une substance active fongicide choisie dans le groupe des conazoles (substance active 1),
b) au moins une autre substance active phytosanitaire (substance active 2), qui présente dans l'eau une solubilité inférieure à 20 g/l
en un rapport des quantités de la substance active 1 à la substance active 2 dans la plage de 10:1 à 1:10.
